# EUROPEAN PATENT SPECIFICATION

(11) **EP 2 657 817 B1**
(45) Date of publication and mention of the grant of the patent: **19.04.2017**
(21) Application number: 11862266.1
(22) Date of filing: 21.07.2011
(51) Int. Cl.: G06F 3/044, G06F 3/041

(54) **TOUCH SCREEN DEVICE AND METHOD THEREOF FOR SENSING APPROACH**
BERÜHRUNGSBILDSCHIRMVORRICHTUNG UND VERFAHREN DAFÜR ZUR NÄHERUNGSERFASSUNG
DISPOSITIF À ÉCRAN TACTILE ET SON PROCÉDÉ DE DÉTECTION D'APPROCHE

(30) Priority: 30.03.2011 CN 201110078914
(43) Date of publication of application: 30.10.2013
(73) Proprietor: ZTE Corporation, Shenzhen, Guangdong 518057 (CN)
(72) Inventor: WU, Hongchao, Shenzhen Guangdong 518057 (CN)
(74) Representative: D'Halleweyn, Nele Veerle Trees Gertrudis
(86) International application number: PCT/CN2011/077431
(87) International publication number: WO 2012/129867

(56) References cited:
- EP-A2- 2 159 670
- CN-A- 101 464 750
- CN-A- 101 676 846
- CN-A- 101 719 344
- CN-A- 101 950 228
- US-A1- 2009 194 341

## Description

The present invention relates to the field of a touch screen technology in a digital terminal, and more particularly, to a touch screen device and a method for realizing proximity sensing by the touch screen device.

In today's digital electronics industry, human-computer interactive terminals increasingly use touch screens as user input devices. The touch screen input is convenient and intuitive, can achieve what you see is what you get, and does not occupy display space, which are not achievable by traditional input devices (such as keyboard, etc.). In recent years, with more and more applications of capacitive touch screens, the human-computer interaction enters into the era of finger touch. With the capacitive touch screens, users do not need to worry about losing carried touch pens, while they can use their fingers to complete operations.

The capacitive touch screen is to achieve touch recognition relying on the capacitive coupling principle, and any object that can accumulate charges is able to form a capacitor with a touch screen, thereby triggering the touch screen. Accordingly, when a user uses a device having the capacitive touch screen, some undesired false triggering may often occur. For example, for a mobile terminal having a capacitive touch screen, when answering a call, facial skin is likely to trigger a hang-up key on the touch screen or produce other false operations if the touch screen device is not turned off. To solve this problem, the mobile terminal having the capacitive touch screen usually sets a proximity sensor near an earphone, and when an ear is approaching the earphone and triggers the sensor, the mobile terminal will close a detection state of the touch screen. This design solves the problem of false triggering when answering the phone, but it also brings some drawbacks: the standalone proximity sensor occupies valuable structural space and also increases overall cost.

Furthermore, due to the existence of the above-mentioned drawbacks of the standalone proximity sensor, the industry begins to consider integrating the proximity sensing function into the touch screen. This design is based on that: when an object with a large-area, such as facial skin, approaches the touch screen, the touch screen needs to be able to identify such a large-area proximity event, so as to turn off the detection state of the touch screen by the terminal. However, such a large-area proximity event is easily confused with touch events with only one (single-point touch) or several small areas (multi-point touch); for example, when the ear and the face of the user are approaching the touch screen, there may only have one or several small areas touching the touch screen, in which case the touch screen will recognize it as a single-point or multi-point touch operation. In addition, even if there is a large-area object touching the touch screen, the terminal may also need a sophisticated algorithm to distinguish it from a normal large-area operating touch screen event, such as to distinguish it from the thumb pressing the touch screen in a normal use; however, this algorithm is not reliable, and it is easy to cause false triggering.

In summary, the related art does not yet provide a solution of integrating the proximity sensing function into the touch screen, thereby effectively avoiding confusion between the large-area proximity event and the normal single-point or multi-point touch event.

US2009/0194341A1 discloses connecting the upper conductive layer of a resistive touch input component in a high impedance state, and connecting the lower conductive layer in a state capable of operating the touch input component. EP2159670 discloses a method of preventing mistakenly triggering a touch panel. In view of this, the main purpose of the present invention is to provide a touch screen device and a method for implementing proximity sensing by the touch screen device, so as to achieve the proximity sensing to a large-area object by the touch screen, and effectively distinguish a large-area proximity event from a normal single-point or multi-point touch event during a user operation.

The present invention provides a method for a touch screen device implementing proximity sensing according to claim 1.

The present invention also provides a touch screen device according to claim 2. The present invention can implement the proximity sensing to a large-area object by the touch screen, and can effectively distinguish the large-area proximity event from the normal single-point or multi-point touch event during a user operation, thereby avoiding unnecessary false triggering; furthermore, the present invention integrates the proximity sensing function into the touch screen, which replaces the standalone proximity sensor in the terminal device, thereby saving the structural space of the terminal device and reducing the overall cost of the terminal device.

### Brief Description of Drawings

FIG. 1 is a flow chart of a method for implementing proximity sensing by a touch screen device in accordance with an embodiment of the present invention;
FIG. 2 is a structural diagram of a touch screen device in accordance with an embodiment of the present invention;
FIG. 3 is a first schematic diagram of a capacitive touch screen in accordance with an embodiment of the present invention;
FIG. 4 is a second schematic diagram of a capacitive touch screen in accordance with an embodiment of the present invention; and
FIG. 5 is a schematic diagram of an internal structure of a capacitive touch screen in accordance with an embodiment of the present invention.

### Preferred Embodiments of the Present Invention

The technical solution of the present invention will be further illustrated in details in combination with the accompanying drawings and embodiments below.

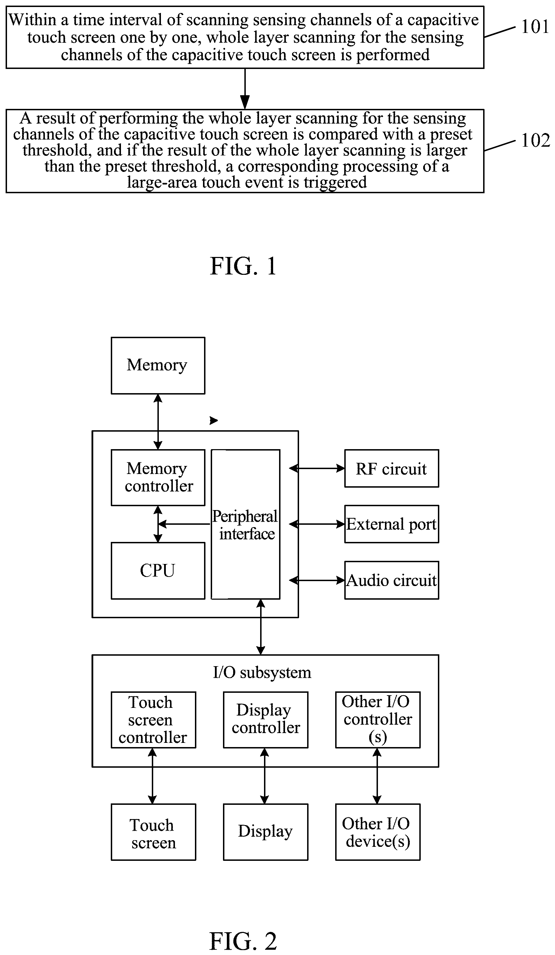

To achieve proximity sensing by a touch screen to a large-area object and effectively distinguish a large-area proximity event from a normal single-point or multi-point touch event during a user operation, a method for a touch screen device implementing the proximity sensing provided in an embodiment of the present invention, as shown in FIG. 1, mainly comprises the following steps.

In step 101, within a time interval of scanning sensing channels of a capacitive touch screen one by one, whole layer scanning for the sensing channels of the capacitive touch screen is performed.

The capacitive touch screen is usually composed of two layers of sensing channels which are mutually perpendicular, and each layer of sensing channels then consist of several single channels in parallel. The normal operation scanning of the capacitive touch screen usually adopts a mode of one by one scanning, and within any time interval for scanning of each single channel, the operation of scanning for the whole layer of sensing channels can be added; and the whole layer scanning can be performed by scanning one layer of the sensing channels, or scanning both two layers of the sensing channels.

In step 102, a result of performing the whole layer scanning for the sensing channels of the capacitive touch screen is compared with a preset threshold, and if the result of the whole layer scanning is larger than the preset threshold, a corresponding processing of a large-area touch event is triggered.

The result of performing the whole layer scanning for the sensing channels of the capacitive touch screen might be: a voltage variation or a capacitance variation of the whole layer of sensing channels;
if the preset threshold is a voltage threshold, it needs to take the voltage variation obtained by scanning the whole layer of sensing channels as the scanning result; correspondingly, when the voltage variation of the whole layer of sensing channels is larger than the preset voltage threshold, it can be determined as a large-area touch event, thus the corresponding processing of the large-area touch event is triggered;
if the preset threshold is a capacitance threshold, it needs to take the capacitance variation obtained by scanning the whole layer of sensing channels as the scanning result; correspondingly, when the capacitance variation of the whole layer of sensing channels is larger than the preset capacitance threshold, it can be determined as a large-area touch event, and the corresponding processing of the large-area touch event is triggered.

It should be noted that, the preset voltage threshold needs to be larger than a maximum value of all the voltage variations in the sensing channels caused by normal single-point and multi-point touch events in the touch screen device, and the preset capacitance threshold needs to be larger than a maximum value of all the capacitance variations in the sensing channels caused by normal single-point and multi-point touch events in the touch screen device. Thus, the normal touch operations can be filtered out, which effectively distinguishes the large-area proximity events from the normal single-point or multi-point touch events during the user operation, so as to avoid that the touch screen device confuses the large-area touch events with the normal single-point and multi-point touch events.

In addition, if both two layers of sensing channels are scanned, a mean value or a variance of results of scanning these two layers of the sensing channels can be obtained and compared with the preset threshold.

It can be seen that, the above-mentioned method in accordance with the embodiment of the present invention comprises two signal scanning modes: one is the normal operation scanning of the capacitive touch screen, which maintains the normal single-point and multi-point operation recognition function; the other is the added standalone whole layer sensing channel scanning operation, which is used to identify the large-area touch event, meanwhile, by the preset threshold value, the normal touch operations are filtered out in this scanning.

The device that can perform the above-mentioned methods should at least comprise: a capacitive touch screen, a display with a graphical user interface, one or more processors, a memory, and one or more modules, procedures or command sets stored in the memory and performing these methods. In some embodiments, the device may further provide a variety of functions including wireless communication.

In addition, the device also needs to comprise: a sensing channel scanning module and a comparing module. The sensing channel scanning module is used to perform the whole layer scanning for the sensing channels of the capacitive touch screen within the time interval of scanning the sensing channels of the capacitive touch screen one by one. The comparing module is used to compare the result of performing, by the sensing channel scanning module, the whole layers scanning for the sensing channels of the capacitive touch screen with a preset threshold, and if the result of the whole layer scanning is larger than the preset threshold, trigger a corresponding processing of the large-area touch event.

Both of the sensing channel scanning module and the comparison module mentioned above can exist in a touch screen device as standalone entities respectively, or their functions can be integrated into a processor of the touch screen device.

In the following, the touch screen device and the method for implementing proximity sensing in accordance with the present invention will be further illustrated in combination with the embodiment of an electronic device shown in FIG. 2.

The electronic device shown in FIG. 2 comprises: a memory, a memory controller, one or more central processing units (CPU), a peripheral interface, a radio frequency (RF) circuit, an audio circuit, an external port, an input/output (I/O) subsystem, a touch screen, a display, and other I/O devices. These components communicate via one or more communication buses or signal lines. The electronic device shown in FIG. 2 may be any electronic device, including but not limited to a handheld computer, a mobile phone, a media player, a personal digital assistant (PDA), etc., which may also include a combination of two or more thereof. It should be understood that the electronic device shown in FIG. 2 is an example of a portable electronic device, in which the components may be more or less than the illustrated components, or have a different component configuration. The various components shown in FIG. 2 can be implemented in hardware, software, or a combination of hardware and software, comprising one or more signal processing and application-specific integrated circuits.

In the electronic device, the memory can include a random access memory, and can also include one or more disk storage devices, flash memory devices, or other non-volatile memory. The memory controller can control the access of other components, such as the CPU and the peripheral interface, of the electronic device to the memory.

The peripheral interface couples input and output peripherals of the device to the CPU and the memory. The one or more processors run a variety of software programs stored in the memory, in order to perform various functions of the electronic device and process data.

The RF circuit receives and sends electromagnetic waves; the RF circuit converts electric signals into the electromagnetic waves, or converts the electromagnetic waves into the electric signals; and the RF circuit communicates with the communication network and other communication devices via the electromagnetic waves.

The audio circuit provides an audio interface between a user and the electronic device. The audio circuit receives audio data from the peripheral interface, converts the audio data into electric signals, and sends the electric signals to a speaker; while the speaker converts the electric signals into sound waves audible by humans. The audio circuit also receives the electrical signals converted from the sound waves from a microphone; and then the audio circuit converts the electric signals into audio data and sends the audio data to the peripheral interface for processing.

The I/O subsystem provides interfaces between the input/output peripherals of the electronic device and the peripheral interface, wherein the input/output peripherals are such as a touch screen, a display, and other I/O devices. The I/O subsystem comprises a touch screen controller, a display controller and one or more I/O controllers for other I/O devices.

The touch screen and the display respectively provide input and output interfaces between the device and the user. The display displays visual output to the user, and this output may include text, graphic, video, and any combination thereof. The touch screen is a touch-sensitive surface that can receive user input, and together with the touch screen controller, it detects the touch on the touch screen, and converts the detected touch into the interaction with a user interface object on the display. The touch screen and the touch screen controller in accordance with the embodiment of the present invention are especially the capacitive touch screen technology. The touch screen controller in accordance with the embodiment of the present invention can integrate with the functions of the sensing channel scanning module and the comparing module to identify the large-area touch event, so as to achieve the method for proximity sensing in accordance with the embodiment of the present invention.

The electronic device shown in FIG. 2 further includes a power supply system to provide the various components with power. The power supply system may include a power management system, one or more power supplies (such as a battery, alternating current), a charging system, a power failure detection circuit, a power converter, and any other components associated with power generation, management and distribution in the portable device.

In the following, taking the mutual capacitance technology for example, the method for implementing the proximity sensing of a capacitive touch screen in accordance with the embodiments of the present invention will be described in detail.

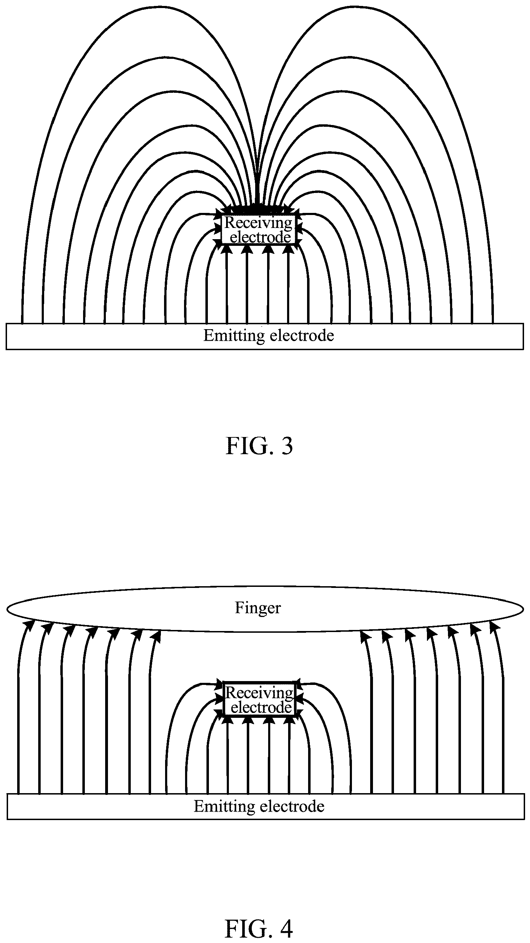

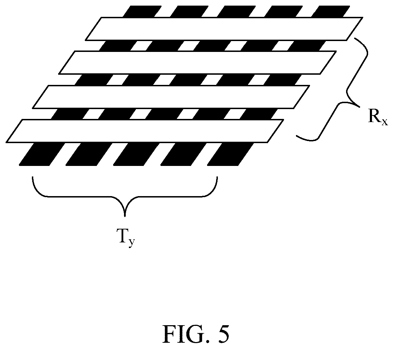

The capacitance is the ability to accommodate a electric field, and a common parallel plate capacitor has a capacitance of C=εS/d, where, ε is a dielectric constant of medium between the plates, S is the area of the plate, and d is a plate distance. It can be seen that, when the plate distance decreases, the capacitance value will increase. FIG. 3 shows basic units of the touch screen, including an emitting electrode (Ty) and a receiving electrode (Rx) which are non-contacting. In a working condition, the controller first charges the capacitor composed of the emitting electrode and the receiving electrode, wherein arrows represent the electric field between the two electrodes. When a finger is approaching, as shown in FIG. 4, capacitors are composed respective between the finger and the emitting electrode and between the finger and the receiving electrode and therefore electric fields are generated (since the area of the plate is relatively large, the electric field between the finger and the emitting electrode is larger). The finger approaching weakens the electric field (voltage) between the two electrodes, at this time, the controller can detect decreasing of voltage value through a discharge operation, and therefore determines whether the finger touches. A common capacitive touch screen is made of two layers of sensing channels which are mutually perpendicular, as shown in FIG. 5. The upper layer is made of several (not limited to the number shown in FIG. 5) receiving electrode sensing channels Rₓ, while the lower layer is composed of several emitting electrode sensing channels T_{y}. When the touch screen works, the controller scans the sensing channels in a predetermined order; for example: fixing one T_{y}, scans all Rₓ in turn, and then fixing T_{y+1}, scans all Rx in turn, and so on, until voltage variations between two of the upper and lower layers of channels have been scanned. The voltage variation represents a capacitance variation at an intersection of two sensing channels respectively belonging to the upper and lower layers; and then, by detecting the intersection with the capacitance variation, the controller can determine a position of finger touch.

The touch screen controller, in the time interval of performing the normal operation of scanning on the sensing channels, adds the scanning of the whole layer of the sensing channels which can be the Rₓ layer and/or the T_{y} layer. At this time, the whole layer of the sensing channels is equivalent to a capacitor plate. The controller detects the voltage variation on the capacitor plate by charging and discharging.

When an object which can accumulate charges approaches the touch screen, it forms an electric field with the Rₓ (or T_{y}) capacitor plate. According to the capacitor calculation formula, the closer the object and the capacitor plate are and the larger the proximity area of the object is, and the more significant the electric field between the object and the capacitor plate is and the larger the voltage variation on the capacitor plate read by the touch screen controller is. Therefore, a voltage variation threshold is set corresponding to an instruction for triggering the "large-area touch event"; when the touch screen controller determines that the voltage variation on the capacitor plate reaches this threshold, it reports the "large-area touch event" instruction to the CPU. The setting condition of the preset threshold is: requiring both the proximity distance and the relatively large proximity area at the same time, to make area formed by the most of single-figure or multi-figure operations which can reach the proximity distance cannot meet the proximity area required by the preset threshold. Thus, the detection by the touch screen controller for the capacitor plate distinguishes the large-area touch event from the multi-finger touch (or single-finger touch) event.

If the CPU receives the "large-area touch event" instruction reported by the touch screen controller, it triggers actions of the corresponding device, such as: turning off the working condition of the touch screen, thereby avoiding the false triggering caused by the large-area proximity to the device.

In summary, the present invention can implement the proximity sensing to a large-area object by the touch screen, and can distinguish effectively the large-area proximity event from the normal single-point or multi-point touch event during a user operation, thereby avoiding unnecessary false triggering; furthermore, the present invention integrates the proximity sensing function into the touch screen, which replaces the standalone proximity sensor in the terminal device, thereby saving the structural space of the terminal device and reducing the overall cost of the terminal device.

The above description is only preferred embodiments of the present invention and is not intended to limit the scope of the present invention.

## Claims

1. A method for a capacitive touch screen device implementing proximity sensing, wherein the capacitive screen device is made of two layers of sensing channels which are mutually perpendicular, one layer, Rx layer, of said two layers comprising a plurality of receiving electrode sensing channels Rx, and the other layer, Ty layer, of said two layers comprises a plurality of emitting electrode sensing channels Ty, the method comprising:
scanning sensing channels of a capacitive touch screen one by one; the method being **characterized in that**:
within a time interval of scanning sensing channels of a capacitive touch screen one by one, performing whole layer scanning for the sensing channels of the capacitive touch screen;
wherein performing whole layer scanning includes scanning of the whole Rx layer and/or the whole Ty layer of the sensing channels and wherein, at this time, the whole layer of the sensing channels is equivalent to a capacitor plate; comparing a result of performing the whole layer scanning for the sensing channels of the capacitive touch screen with a preset threshold;
wherein the result of performing the whole layer scanning for the sensing channels of the capacitive touch screen is a voltage variation or a capacitance variation of the whole layer of sensing channels;
and if the result of the whole layer scanning is larger than the preset threshold, triggering a corresponding processing of a large-area touch event;
wherein the preset threshold is larger than a maximum value of all the voltage or capacitance variations in the sensing channels caused by normal single-point and multi-point touch events in the touch screen device.

2. A capacitive touch screen device, comprising:
a sensing channel scanning module, configured to perform whole layer scanning for sensing channels of a capacitive touch screen within a time interval of scanning the sensing channels of the capacitive touch screen one by one; wherein the capacitive screen device is made of two layers of sensing channels which are mutually perpendicular, one layer, Rx layer, of said two layers comprising a plurality of receiving electrode sensing channels Rx, and the other layer, Ty layer, of said two layers comprising a plurality of emitting electrode sensing channels Ty; the device being **characterized in that** the sensing channel scanning module is configured to perform scanning of the whole Rx layer and/or whole Ty layer of the sensing channels within the time interval of scanning sensing channels of the capacitive touch screen one by one, wherein, at the time of the whole layer scanning, the whole layer of the sensing channels is equivalent to a capacitor plate; and
a comparing module, configured to compare a result of performing, by the sensing channel scanning module, the whole layer scanning for the sensing channels of the capacitive touch screen with a preset threshold, and if the result of the whole layer scanning is larger than the preset threshold, trigger a corresponding processing of a large-area touch event;
wherein the preset threshold is larger than a maximum value of all the voltage or capacitance variations in the sensing channels caused by normal single-point and multi-point touch events in the touch screen device.

## Patentansprüche

1. Verfahren für eine kapazitive Berührungsbildschirmvorrichtung für eine Näherungserfassung, wobei die kapazitive Bildschirmvorrichtung aus zwei Schichten von Erfassungskanälen, die rechtwinklig zueinander angeordnet sind, hergestellt ist, wobei eine Schicht der zwei Schichten, die Rx-Schicht, eine Mehrzahl von Empfangselektrodenerfassungskanälen Rx umfasst, und die andere Schicht der zwei Schichten, die Ty-Schicht, eine Mehrzahl von Emissionselektrodenerfassungskanälen Ty umfasst, wobei das Verfahren umfasst:
Abtasten der Erfassungskanäle eines kapazitiven Berührungsbildschirms einen nach dem anderen; wobei das Verfahren **dadurch gekennzeichnet ist, dass**:
innerhalb des Zeitintervalls des Abtastens der Erfassungskanäle eines kapazitiven Berührungsbildschirms einen nach dem anderen eine gesamte Schichtabtastung für die Erfassungskanäle des kapazitiven Berührungsbildschirms durchgeführt wird;
wobei die Durchführung der gesamten Schichtabtastung ein Abtasten der gesamten Rx-Schicht und/oder der gesamten Ty-Schicht der Erfassungskanäle umfasst, und wobei zu diesem Zeitpunkt die gesamte Schicht der Erfassungskanäle äquivalent zu einer Kondensatorplatte ist;
Vergleichen des Ergebnisses der Durchführung der gesamten Schichtabtastung für die Erfassungskanäle des kapazitiven Berührungsbildschirms mit einem vorgegebenen Grenzwert; wobei es sich bei dem Ergebnis der Durchführung der gesamten Schichtabtastung für die Erfassungskanäle des kapazitiven Berührungsbildschirms um eine Spannungsänderung oder eine Kapazitanzänderung der gesamten Schicht von Erfassungskanälen handelt;
und falls das Ergebnis der gesamtem Schichtabtastung größer als der vorgegebene Grenzwert ist, Auslösen einer korrespondierenden Verarbeitung eines großflächigen Berührungsereignisses; wobei der vorgegebene Grenzwert größer ist als ein maximaler Wert aller Spannungsänderungen oder Kapazitanzänderungen in den Erfassungskanälen, die von normalen Einzelpunkt- oder Multipunkt-Berührungsereignissen in der Berührungsbildschirmvorrichtung verursacht werden.

2. Kapazitive Berührungsbildschirmvorrichtung, die umfasst:
ein Modul zur Abtastung der Erfassungskanäle, das dazu konfiguriert ist, innerhalb des Zeitintervalls des Abtastens der Erfassungskanäle eines kapazitiven Berührungsbildschirms einen nach dem anderen eine gesamte Schichtabtastung für die Erfassungskanäle des kapazitiven Berührungsbildschirms durchzuführen; wobei die kapazative Berührungsbildschirmvorrichtung aus zwei Schichten von Erfassungskanälen, die rechtwinklig zueinander angeordnet sind, hergestellt ist, wobei eine Schicht der zwei Schichten, die Rx-Schicht, eine Mehrzahl von Empfangselektrodenerfassungskanälen Rx umfasst, und die andere Schicht der zwei Schichten, die Ty-Schicht, eine Mehrzahl von Emissionselektrodenerfassungskanälen Ty umfasst, wobei die Vorrichtung **dadurch gekennzeichnet ist, dass**:
das Modul zur Abtastung der Erfassungskanäle dazu konfiguriert ist, innerhalb des Zeitintervalls des Abtastens der Erfassungskanäle des kapazitiven Berührungsbildschirms einen nach dem anderen die gesamte Rx-Schicht und/oder die gesamte Ty-Schicht der Erfassungskanäle abzutasten, wobei zu dem Zeitpunkt des Abtastens der gesamten Schicht die gesamte Schicht der Erfassungskanäle äquivalent zu einer Kondensatorplatte ist; und
ein Vergleichsmodul, das dazu konfiguriert ist, das Ergebnis der durch das Modul zur Abtastung der Erfassungskanäle durchgeführten Abtastung der gesamten Schicht für die Erfassungskanäle des kapazitiven Berührungsbildschirms mit einem vorgegebenen Grenzwert zu vergleichen; falls das Ergebnis der gesamtem Schichtabtastung größer als der vorgegebene Grenzwert ist, eine korrespondierende Verarbeitung eines großflächigen Berührungsereignisses auszulösen;
wobei der vorgegebene Grenzwert größer ist als ein maximaler Wert aller Spannungsänderungen oder Kapazitanzänderungen in den Erfassungskanälen, die von normalen Einzelpunkt- oder Multipunkt-Berührungsereignissen in der Berührungsbildschirmvorrichtung verursacht werden.

## Revendications

1. Procédé appliqué à un dispositif à écran tactile capacitif mettant en oeuvre une détection de proximité, ledit dispositif à écran capacitif se composant de deux couches de canaux de détection mutuellement perpendiculaire, une couche, la couche Rx, desdites deux couches comprenant une pluralité de canaux de détection Rx formant électrode réceptrice, et l'autre couche, la couche Ty, desdites deux couches comprend une pluralité de canaux de détection Ty formant électrode émettrice, le procédé comprenant l'opération consistant à :
examiner par balayage les canaux de détection d'un écran tactile capacitif un par un ; le procédé étant **caractérisé par** les opérations selon lesquelles :
au cours d'un intervalle de temps de balayage des canaux de détection d'un écran tactile capacitif un par un, un balayage de couche totale est réalisé concernant les canaux de détection de l'écran tactile capacitif ;
étant entendu que la réalisation du balayage de couche totale comprend le balayage de la totalité de la couche Rx et/ou de la totalité de la couche Ty des canaux de détection et, à cet instant, la totalité de la couche des canaux de détection est équivalente à une plaque de condensateur ; un résultat de réalisation du balayage de couche totale concernant les canaux de détection de l'écran tactile capacitif est comparé à une valeur seuil préétablie ;
étant entendu que le résultat de réalisation du balayage de couche totale concernant les canaux de détection de l'écran tactile capacitif consiste en une variation de tension ou une variation de capacitance de la totalité de la couche des canaux de détection ;
et si le résultat du balayage de couche totale est supérieur à la valeur seuil préétablie, un traitement correspondant relatif à un événement tactile de grande superficie est déclenché ;
étant entendu que la valeur seuil préétablie est supérieure à une valeur maximale de toutes les variations de tension ou de capacitance présentes dans les canaux de détection causées par des événements tactiles normaux en un point unique ou de multiples points dans le dispositif à écran tactile.

2. Dispositif à écran tactile capacitif, comprenant :
un module de balayage de canaux de détection, configuré pour réaliser un balayage de couche totale concernant les canaux de détection d'un écran tactile capacitif au cours d'un intervalle de temps de balayage des canaux de détection de l'écran tactile capacitif un par un ; le dispositif à écran capacitif se composant de deux couches de canaux de détection mutuellement perpendiculaires, une couche, la couche Rx, desdites deux couches comprenant une pluralité de canaux de détection Rx formant électrode réceptrice, et l'autre couche, la couche Ty, desdites deux couches comprenant une pluralité de canaux de détection Ty formant électrode émettrice ; le dispositif étant **caractérisé en ce que**
le module de balayage de canaux de détection est configuré pour réaliser le balayage de la totalité de la couche Rx et/ou de la totalité de la couche Ty des canaux de détection au cours de l'intervalle de temps de balayage des canaux de détection de l'écran tactile capacitif un par un, étant entendu que, au moment du balayage de la totalité de la couche, la totalité de la couche des canaux de détection est équivalente à une plaque de condensateur ; et
un module de comparaison, configuré pour comparer le résultat issu de la réalisation, par le module de balayage de canaux de détection, du balayage de couche totale concernant les canaux de détection de l'écran tactile capacitif, à une valeur seuil préétablie, et, si le résultat du balayage de couche totale est supérieur à la valeur seuil préétablie, pour déclencher un traitement correspondant relatif à un événement tactile de grande superficie ;
étant entendu que la valeur seuil préétablie est supérieure à une valeur maximale de toutes les variations de tension ou de capacitance présentes dans les canaux de détection causées par des événements tactiles normaux en un point unique ou de multiples points dans le dispositif à écran tactile.
